# EUROPÄISCHE PATENTSCHRIFT

(11) **EP 1 555 148 B1**
(45) Veröffentlichungstag und Bekanntmachung des Hinweises auf die Patenterteilung: **05.03.2008**
(21) Anmeldenummer: 04290089.4
(22) Anmeldetag: 13.01.2004
(51) Int. Cl.: B60H 1/00

(54) **Klimatisierungsvorrichtung, insbesondere für ein Kraftfahrzeug**
Air conditioning device, in particular for a vehicle
Dispositif de climatisation, en particulier pour un véhicule

(43) Veröffentlichungstag der Anmeldung: 20.07.2005
(73) Patentinhaber: Behr France Rouffach SAS, 68250 Rouffach (FR)
(72) Erfinder: Peter, Vincent, 68190 Ensisheim (FR)
(74) Vertreter: Grauel, Andreas

(56) Entgegenhaltungen:
- EP-A- 1 319 540
- DE-A- 19 707 405
- DE-A- 19 842 875
- US-A- 5 775 407

## Beschreibung

Die vorliegende Erfindung betrifft eine Klimatisierungsvorrichtung zur Klimatisierung eines Raumes, insbesondere eines Kraftfahrzeuginnenraumes.

Eine Klimaanlage eines Kraftfahrzeuges weist üblicherweise mehrere in den Fahrzeuginnenraum mündende Ausströmöffnungen auf, die wahlweise mit gekühlter oder erwärmter Luft beaufschlagt werden können. Typischerweise sind wenigstens jeweils zwei Ausströmöffnungen im Fußraum, im Bereich einer Mittelkonsole sowie oberhalb einer Armaturentafel vorgesehen, jeweils mindestens eine auf einer Fahrer- sowie einer Beifahrerseite. Zur Verteilung der klimatisierten Luft auf die verschiedenen Ausströmöffnungen ist diesen bei bekannten Klimaanlagen jeweils wenigstens eine Stelleinrichtung zugeordnet, mittels derer eine Durchlassöffnung variabel geöffnet oder verschlossen werden kann. Diese Stelleinrichtungen sind meist als schwenkbare Klappen ausgebildet, die einen Kanalquerschnitt eines Luftführungskanals je nach Winkelstellung teilweise oder vollständig freigeben oder sperren können. Damit jede dieser schwenkbaren Klappen individuell angesteuert werden kann, ist jeweils ein Aktor, bspw. ein elektrischer Stellmotor o. dgl. notwendig.

Aus der EP 1 266 777 A1 ist eine Fahrzeugklimaanlage sowie ein Luftverteilermodul bekannt, bei dem ein Gehäuse eine Durchführung für eine Lenksäule des Fahrzeugs aufweist. Die Anordnung der übrigen Komponenten wie Gebläse, Kühl- und Heizeinrichtung sowie der Luftverteilungskanäle ist so abgestimmt, dass die Lenksäule ohne Funktionsbeeinträchtigung durch das Gehäuse und an den Komponenten vorbei geführt werden kann.

Die gattungsgemäße DE 198 42 875 A1 offenbart eine Fahrzugklimaanlage, bei welcher zwei Schaltklappen drehbar vorgesehen sind.

Bei dieser Fahrzeugklimaanlage ist vorgesehen, dass eine Luftverteilung zwischen wenigstens zwei in den Raum bzw. in den Kraftfahrzeuginnenraum mündenden Ausströmöffnungen mittels wenigstens einer Verteilerklappe variabel einstellbar ist. Mittels der Verteilerklappe kann mit nur einem Bauteil eine variable Luftverteilung zwischen zwei benachbarten Ausströmöffnungen erreicht werden. Eine erste Ausströmöffnung kann bspw. in einen Fußraum des Kraftfahrzeuginnenraums münden, währen eine zweite Ausströmöffnung bspw. in einen oberen Bereicht des Kraftfahrzeuginnenraums münden kann. Anstatt einer Klappe für jede einzelne Ausströmöffnung ist bei DE 198 42 875 A1 wenigstens eine Verteilerklappe zum variablen Verschließen bzw. Freigeben zweier oder dreier benachbarter Ausströmöffnungen vorgesehen.

Bei DE 198 42 875 sind zur variablen Luftverteilung zwischen drei in den Raum mündenden Ausströmöffnungen zwei Verteilerklappen vorgesehen. Dabei ist die Luftverteilung zwischen einer ersten Ausströmöffnung und einer zweiten Ausströmöffnung mittels einer zwischen diesen angeordnetem Verteilerklappe variabel einstellbar. Eine zweite Verteilerklappe ist zwischen den zwei ersten Ausströmöffnungen und einer dritten Ausströmöffnung angeordnet. Beide Verteilerklappen weisen jeweils eine erste und eine zweite Anschlagstellung auf.

Der vorliegenden Erfindung liegt die Aufgabe zugrunde, eine Klimaanlage zur Innenraumtemperierung zur Verfügung zu stellen, die sich durch einen einfachen und kompakten Aufbau sowie durch eine einfache Steuerbarkeit auszeichnet.

Diese Aufgabe wird durch die im Anspruch 1 angegebenen Merkmale gelöst.

Gegenüber bekannten Klimatisierungsvorrichtungen sieht die erfindungsgemäße Anordnung eine geringere Anzahl von Klappen vor als Ausströmöffnungen vorhanden sind. Hierdurch kann gegenüber den bekannten Klimatisierungsvorrichtungen zumindest eine Verteilerklappe eingespart werden, woraus zudem eine Vereinfachung der Kinematik zur Ansteuerung der Verteilerklappe resultiert. Eine Klappe bietet jeweils die Möglichkeit, zwei Luftaustritte zu sperren. Die erfindungsgemäße Klimatisierungsvorrichtung kann aus diesem Grund sehr einfach, kostengünstig und kompakt ausgeführt sein.

Ein Luftverteiler einer Klimatisierungsvorrichtung gemäß einer der zuvor beschriebenen Ausführungsformen umfasst ein Gehäuse mit einem darin angeordneten Gebläse, eine Kühleinrichtung, eine Heizeinrichtung sowie für jede Seite des Fahrzeuginnenraumes wenigstens drei Ausströmöffnungen zur Luftzufuhr. Diese drei Ausströmöffnungen sind jeweils auf die zuvor beschriebene Weise mittels einer oder zweier Verteilerklappen variabel verschließbar oder freigebbar.

Der erfindungsgemäße Luftverteiler ist einfach aufgebaut und benötigt gegenüber bekannten Vorrichtungen weniger bewegliche Stellelemente.

Die Erfindung wird nachfolgend in bevorzugten Ausführungsbeispielen anhand der zugehörigen Zeichnungen näher erläutert. Dabei zeigen:
- Figur 1: eine schematische Perspektivdarstellung einer ersten Variante einer erfindungsgemäßen Klimatisierungsvorrichtung,
- Figuren 2 bis 6: verschiedene Betriebszustände der Klimatisierungsvorrichtung gemäß Figur 1,
- Figur 7: eine schematische Perspektivdarstellung einer zweiten Variante der erfindungsgemäßen Klimatisierungsvorrichtung,
- Figuren 8 bis 12: verschiedene Betriebszustände der Klimatisierungsvorrichtung gemäß Figur 7,
- Figur 13: eine schematische Perspektivdarstellung einer dritten Variante der erfindungsgemäßen Klimatisierungsvorrichtung,
- Figur 14: eine Luftverteilerklappe der Klimatisierungsvorrichtung entsprechend Figur 13 und die
- Figuren 15 bis 19: verschiedene Betriebszustände der Klimatisierungsvorrichtung gemäß Figur 13.

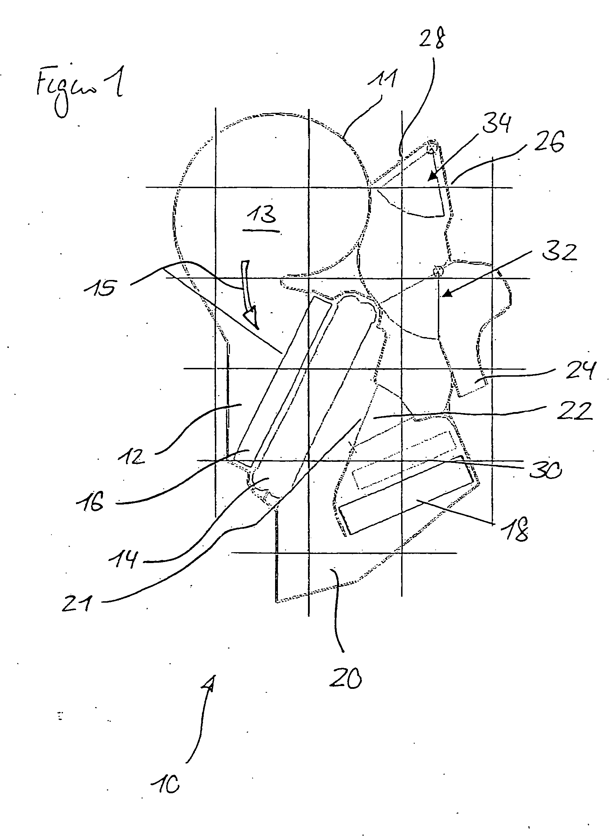

Figur 1 verdeutlicht in einer Prinzipdarstellung den Aufbau sowie die grundsätzliche Funktion einer erfindungsgemäßen Klimatisierungsvorrichtung 10. Ein Gehäuse 11 umfasst einen Luftführungskanal 12 und weist ein Gebläse 13 zur Erzeugung einer Luftströmung durch den Luftführungskanal 12 auf. In diesem ist stromabwärts des Gebläses 13 eine Kühleinrichtung 14 angeordnet, der ein Filter 16 vorgeschaltet sein kann. Die Kühleinrichtung 14 ist üblicherweise ein sog. Verdampfer bzw. eine Wärmetauschereinrichtung und dient zur Abkühlung der vom Gebläse 13 geförderten Luftströmung 15. Stromabwärts der Kühleinrichtung 14 befindet sich eine Heizeinrichtung 18, die in einem unteren Zweigkanal 20 angeordnet ist.

Parallel zu diesem Zweigkanal 20 verläuft ein zusätzlicher Bypasskanal 21, der mittels einer Mischungsklappe 22 verschlossen werden kann. Diese Mischungsklappe 22 dient zur Regulierung der Lufttemperatur, da bei verschlossener Klappe 22 die gesamte geförderte Luft durch den Zweigkanal 20 und die Heizeinrichtung 18 strömt, während bei geöffneter Mischungsklappe 22 die Luft aufgrund des geringeren Widerstandes an der Heizeinrichtung 18 vorbei durch den Bypasskanal 21 strömt. Der Luftführungskanal 12 mündet nach der Verzweigung wieder in einem einzigen Kanal und führt im gezeigten Ausführungsbeispiel zu drei Ausströmöffnungen 24, 26, 28, die jeweils in einen Kraftfahrzeuginnenraum (nicht dargestellt) münden. Die erste Ausströmöffnung 24 ist nach unten gerichtet und dient normalerweise zur Klimatisierung bzw. Erwärmung eines Fußraumes des Fahrzeuginnenraums. Die zweite Ausströmöffnung 26 kann sich bspw. in einer Armaturentafel befinden und dient zur Klimatisierung bzw. Erwärmung eines mittleren Bereichs des Fahrzeuginnenraums, während die nach oben gerichtete dritte Ausströmöffnung 28 in erster Linie zur Erwärmung bzw. Belüftung einer Windschutzscheibe und/oder von Seitenscheiben des Fahrzeugs dient, bspw., um diese beschlagfrei zu halten. Die dritte Ausströmöffnung 28 weist zudem eine Defrosterfunktion auf. Typischerweise sind bei einer Klimatisierungsvorrichtung 10 zur Klimatisierung eines Fahrzeugsinnenraums die in Figur 1 dargestellten Ausströmöffnungen 24, 26 und 28 paarweise für jede Seite des Fahrzeuginnenraums vorhanden.

Die Heizeinrichtung 18 kann eine Reihe von elektrisch beheizbaren Drähten aufweisen, die von der zu erwärmenden Luft durchströmt werden. Alternativ dazu oder zusätzlich kann ein PTC-Element 30 vorgesehen sein, das im gezeigten Ausführungsbeispiel der Heizeinrichtung nachgeordnet ist und das zur schnelleren Erwärmung auf eine gewünschte Temperatur dienen kann.

Zwischen der ersten Ausströmöffnung 24 und den beiden weiteren Ausströmöffnungen 26 und 28 ist eine erste Verteilerklappe 32 angeordnet, die zwei Anschlagstellungen aufweist. Zwischen zweiter Ausströmöffnung 26 und dritter Ausströmöffnung 28 ist einer zweite Verteilerklappe 34 angeordnet, die ebenfalls zwei Anschlagstellungen aufweist. Mittels der ersten Verteilerklappe 32 kann die Luft zwischen erster Ausströmöffnung 24 und den beiden weiteren Ausströmöffnungen 26 und 28 verteilt werden. Mittels der zweiten Verteilerklappe 34 kann die Luft zwischen zweiter und dritter Ausströmöffnung 26 bzw. 28 verteilt werden.

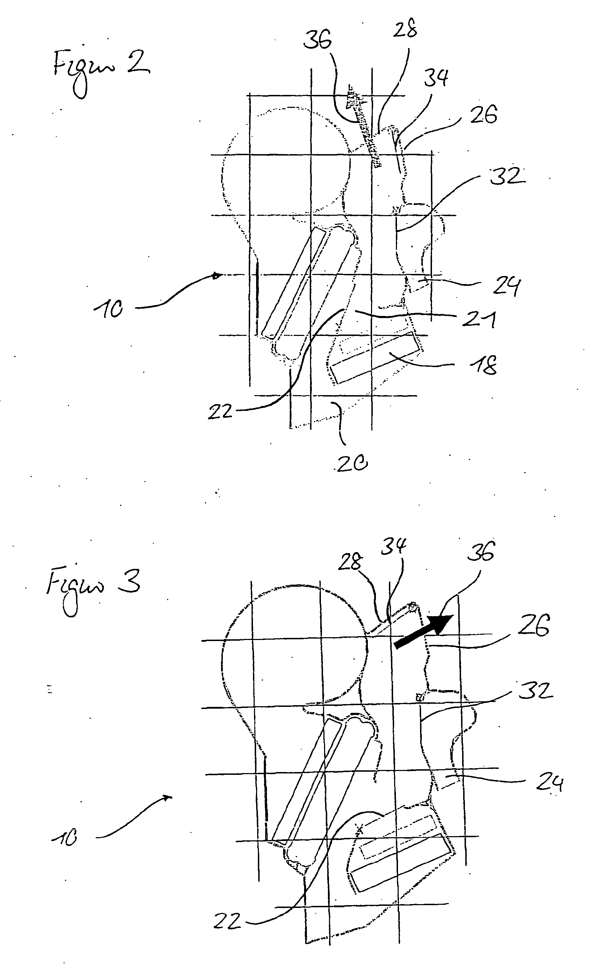

Figur 2 verdeutlicht eine Defrosterstellung, bei der sich die erste Verteilerklappe 32 in einer ersten Anschlagstellung befindet, so dass die erste Ausströmöffnung 24 vollständig verschlossen ist. Die zweite Verteilerklappe 32 befindet sich ebenfalls in einer ersten Anschlagstellung, bei der die zweite Ausströmöffnung 26 vollständig verschlossen ist. Es ist hierbei von allen drei Ausströmöffnungen 24, 26 und 28 lediglich die dritte Ausströmöffnung 28 geöffnet, die in Richtung zur Windschutzscheibe gerichtet ist. Bei dieser Defrosterstellung der Klimatisierungsvorrichtung 10 ist die Mischungsklappe 22 vorzugsweise geschlossen, so dass der Bypasskanal 21 verschlossen ist und die gesamte klimatisierte Luft durch den Zweigkanal 20 mit der darin angeordneten Heizeinrichtung 18 strömt. Die Heizeinrichtung 18 sorgt hierbei für die gewünschte Erwärmung der klimatisierten Luft, um die Scheibe möglichst schnell von Beschlag beziehungsweise von Eis zu befreien. Die erwärmte Luft ist als Pfeil mit der Bezugsziffer 36 verdeutlicht.

Figur 3 zeigt eine Belüftungsstellung, bei der sich die erste Verteilerklappe 32 wiederum in der ersten Anschlagstellung befindet, so dass die erste Ausströmöffnung 24 in Richtung Fußraum geschlossen ist. Die zweite Verteilerklappe 34 befindet sich hierbei in einer zweiten Anschlagstellung, bei der die dritte Ausströmöffnung 28 verschlossen und die zweite Ausströmöffnung 26 freigegeben ist. Bei dieser Belüftungsstellung kann die Mischungsklappe 22 verschlossen oder teilweise geöffnet sein, je nachdem, welche Temperatur von den Fahrzeuginsassen gewünscht wird.

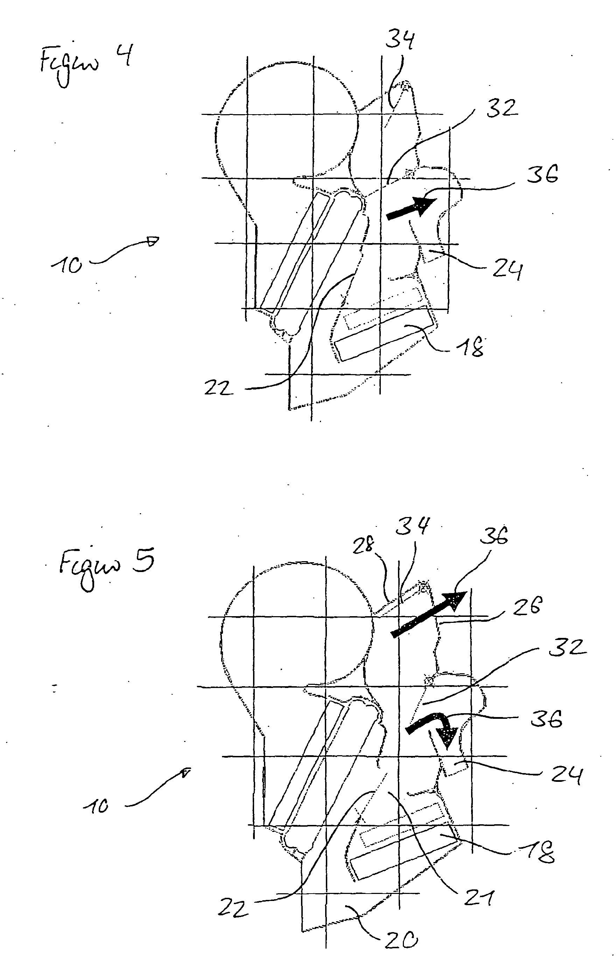

Figur 4 verdeutlicht eine weitere Möglichkeit der Einstellung der Klimatisierungsvorrichtung 10, bei der die erste Verteilerklappe 32 in eine zweite Anschlagstellung gebracht ist, bei der zweite Ausströmöffnung 26 und dritte Ausströmöffnung 28 verschlossen sind. Die erste Ausströmöffnung 24 ist hierbei freigegeben.

Die Mischungsklappe 22 kann wahlweise in eine geöffnete Stellung zur Klimatisierung oder in eine geschlossene Stellung zur Erwärmung des Fußraums gebracht sein. Die Stellung der zweiten Verteilerklappe 34 ist hierbei ohne Bedeutung, da die gesamte Luft 36 zur ersten Ausströmöffnung 24 geleitet wird.

Figur 5 verdeutlicht eine mögliche Zwischenstellung, bei der die Mischungsklappe 22 teilweise geöffnet ist, so dass die klimatisierte Luft 36 teilweise durch den Bypasskanal 21 und teilweise durch den Zweigkanal 20 mit der Heizeinrichtung 18 strömt. Auch die erste Verteilerklappe 32 befindet sich in einer Zwischenstellung, so dass die klimatisierte und teilweise erwärmte Luft 36 sowohl durch die erste Ausströmöffnung 24 als auch durch die zweite Ausströmöffnung 26 strömen kann. Die zweite Verteilerklappe 34 befindet sich in der zweiten Anschlagstellung, so dass die dritte Ausströmöffnung 28 verschlossen ist.

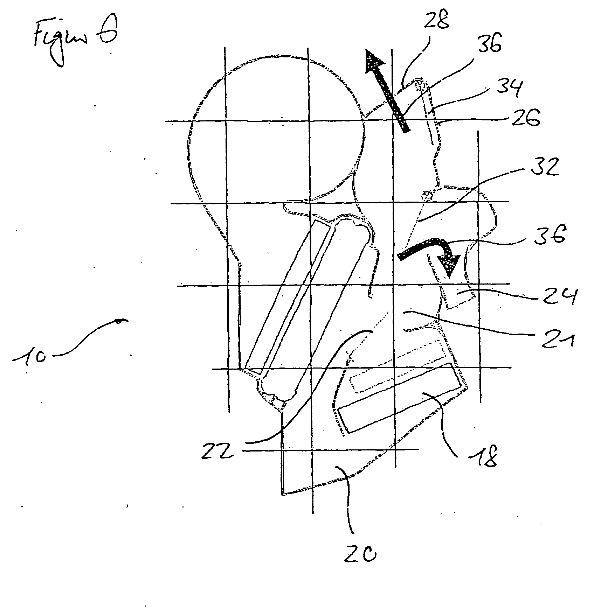

Figur 6 zeigt eine alternative Einstellung, bei der sich die erste Verteilerklappe 32 in einer Zwischenstellung befindet und bei der die zweite Verteilerklappe 34 in die erste Anschlagstellung gebracht ist, so dass die erste Ausströmöffnung 24 und die dritte Ausströmöffnung 28 freigegeben sind. Diese Einstellung kann zur Erwärmung des Fußraums sowie zur Defrostung bzw. zur Beschlagsverhinderung der Fahrzeugscheibe geeignet sein.

Grundsätzlich können die beiden Verteilerklappen 32 und 34 sowie die Mischungsklappe 22 in beliebige Zwischenstellungen gebracht werden, so dass je nach Bedarf eine Klimatisierung beziehungsweise Erwärmung einer, zwei oder aller drei Innenraumzonen ermöglicht ist.

Die Figuren 1 bis 6 verdeutlichen die äußerst kompakte Bauform der erfindungsgemäßen Klimatisierungsvorrichtung 10. Sie verdeutlichen zudem, dass die Luftverteilung auf drei Ausströmöffnungen einer Innenraumzone mittels nur zweier Verteilerklappen in gewünschter Weise steuerbar ist. Die zweite Verteilerklappe 34 übernimmt hierbei gleichzeitig die variable Steuerung der Luftverteilung auf zwei benachbarte Ausströmöffnungen 26 und 28. Eine dritte Verteilerklappe ist nicht notwendig. Die Ansteuerung der beiden Verteilerklappen 32 und 34 sowie der Mischungsklappe 22 kann in geeigneter Weise bspw. mittels elektrischer Stellmotoren o. dgl. erfolgen.

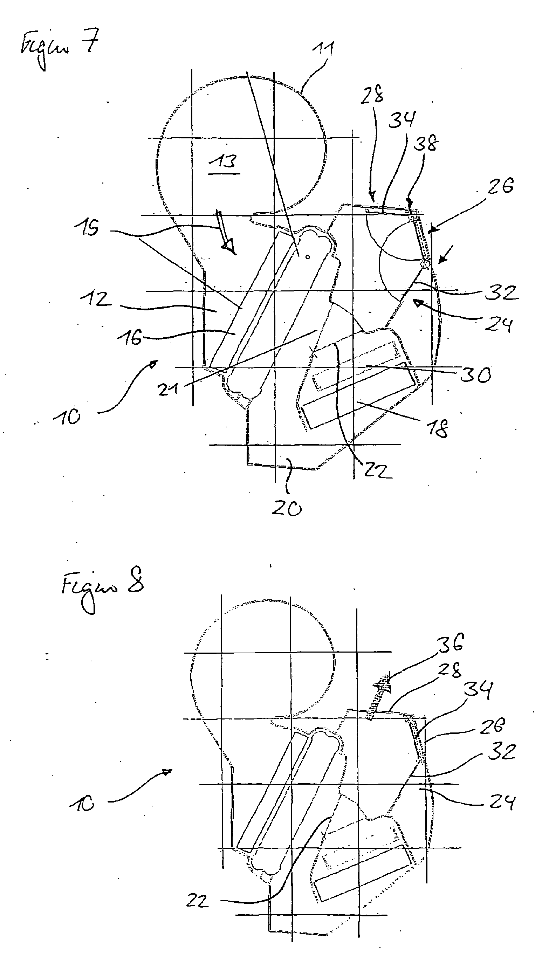

Die Figuren 7 bis 12 zeigen eine alternative Ausgestaltung der Klimatisierungsvorrichtung 10 in schematischer Darstellung. Der obere Bereich mit den Luftaustrittsöffnungen 24 bis 28 ist hierbei gegenüber der ersten Variante nochmals deutlich kompakter gestaltet. Die beiden Verteilerklappen 32 und 34 sind so nah beieinander angeordnet, dass sich eine Überschneidung ihrer Schwenkbereiche ergibt. Die beiden Verteilerklappen 32 und 34 müssen aus diesem Grund in ihren Schwenkbewegungen so miteinander gekoppelt sein, dass sie nicht miteinander kollidieren. Während die übrigen Komponenten denen der ersten Variante gemäß der Figuren 1 bis 6 entsprechen, grenzen die zweite und die dritte Ausströmöffnung 26 und 28 in einer Kante aneinander. In diesem Eckbereich befindet sich eine Schwenkachse 38 der zweiten Verteilerklappe 34, die je nach ihrer Stellung die zweite Ausströmöffnung 26 oder die dritte Ausströmöffnung 28 verschließen kann.

Die Figur 8 zeigt eine Defrosterstellung, bei der die Mischungsklappe 22 sowie die erste Verteilerklappe 32 geschlossen sind.

Die zweite Verteilerklappe 34 ist in die erste Anschlagstellung gebracht, bei der die zweite Ausströmöffnung 26 verschlossen und die dritte Ausströmöffnung 28 geöffnet ist. Die erste Ausströmöffnung 24 ist durch die erste Verteilerklappe 32 verschlossen. Die erwärmte Luft 36 strömt hierbei ausschließlich durch die dritte Ausströmöffnung 28 in Richtung zur Windschutzscheibe und/oder der Seitenscheiben des Fahrzeugs.

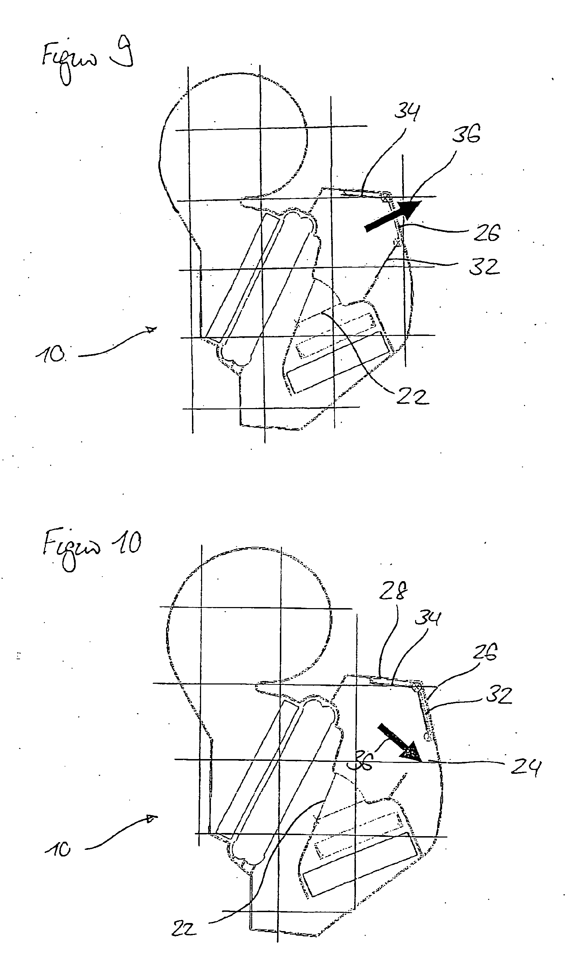

Figur 9 zeigt eine normale Belüftungsstellung, bei der gegenüber der Defrosterstellung der Figur 8 die zweite Verteilerklappe 34 in die zweite Anschlagstellung gebracht ist. Die zweite Ausströmöffnung 26 ist hierbei geöffnet, während die dritte Ausströmöffnung 28 verschlossen ist. Die Mischungsklappe 22 kann wahlweise geöffnet oder geschlossen sein oder sich in einer Mittelstellung befinden, je nach gewünschter Temperierung der Luft 36.

Figur 10 zeigt eine Fußraumbelüftungsstellung, bei der die erste Verteilerklappe 32 in die zweite Anschlagstellung gebracht ist. Hierbei ist die zweite Ausströmöffnung 26 mittels der ersten Verteilerklappe 32 verschlossen, während die dritte Ausströmöffnung 28 von der zweiten Verteilerklappe 34 verschlossen wird. Die Mischungsklappe 22 kann wahlweise geöffnet oder geschlossen sein oder sich in einer Mittelstellung befinden, je nach gewünschter Temperierung der Luft 36.

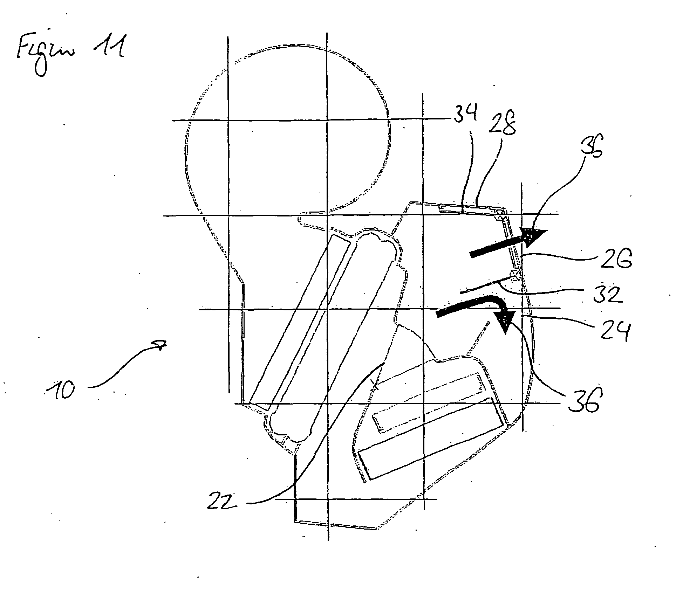

Figur 11 zeigt eine kombinierte Stellung zur Fuß- und Innenraumbelüftung, bei der sich die erste Verteilerklappe 32 in einer Zwischenstellung befindet, so dass die Luft 36 sowohl aus der ersten als auch aus der zweiten Ausströmöffnung 24 und 26 ausströmen kann. Die dritte Ausströmöffnung 28 ist wiederum von der zweiten Verteilerklappe 34 verschlossen.

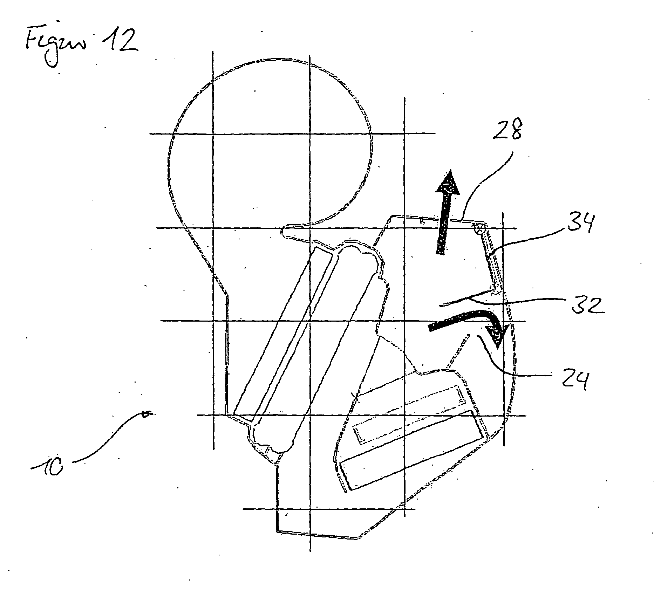

Figur 12 zeigt eine kombinierte Stellung zur Fußraum und Scheibenbelüftung, bei der sich die erste Verteilerklappe 32 in einer Zwischenstellung befindet, bei der die erste Ausströmöffnung 24 geöffnet ist. Die zweite Verteilerklappe 34 befindet sich in der ersten Anschlagstellung, bei der die zweite Ausströmöffnung 26 verschlossen und die dritte Ausströmöffnung 28 geöffnet ist.

Auch bei diesen zweiten Variante der erfindungsgemäßen Klimatisierungsvorrichtung 10 sind wiederum zahlreiche Zwischenstellungen, der Mischungsklappe 22, der ersten sowie der zweiten Verteilerklappe 32, 34 möglich, so dass sich die verschiedenen gewünschten Klimatisierungs- und Erwärmungsbedingungen im Fahrzeug beziehungsweise im zu klimatisierenden Raum herstellen lassen.

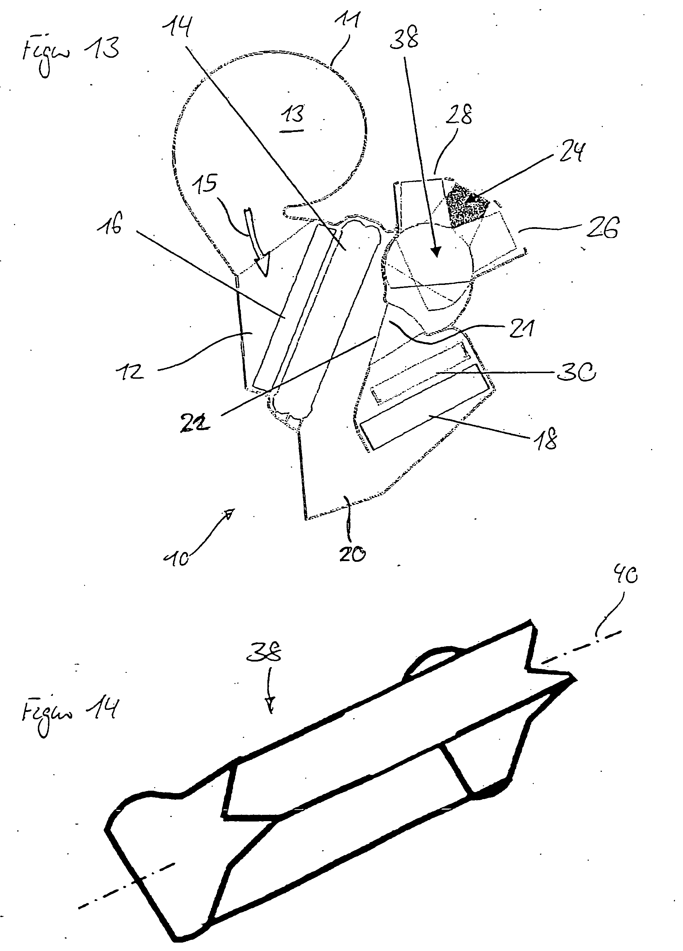

Figur 13 zeigt in schematischer Schnittdarstellung eine dritte Variante einer erfindungsgemäßen Klimatisierungsvorrichtung 10. Anstatt zweier Luftverteilungsklappen ist nur noch eine einzige Verteilerklappe vorhanden, die im vorliegenden Zusammenhang als dritte Verteilerklappe 38 bezeichnet wird. Wie in der schematischen Perspektivdarstellung der Figur 14 erkennbar ist, weist die dritte Verteilerklappe 38 die Form einer sog. Trommelklappe auf, da sie die klimatisierte Luft je nach Schwenkstellung in eine der Ausströmöffnungen 24, 26 und 28 leitet und die jeweils anderen Ausströmöffnungen verschließt. Die dritte Verteilerklappe 38 ist hierzu um eine Schwenkachse 40 verschwenkbar, die quer zur Strömungsrichtung der Luft angeordnet ist.

Der übrige Aufbau der dritten Variante der Klimatisierungsvorrichtung entsprechend der Figuren 13 bis 19 entspricht der ersten Variante gemäß Figur 1, so dass die weiteren in Figur 13 dargestellten Elemente nicht näher erläutert werden müssen.

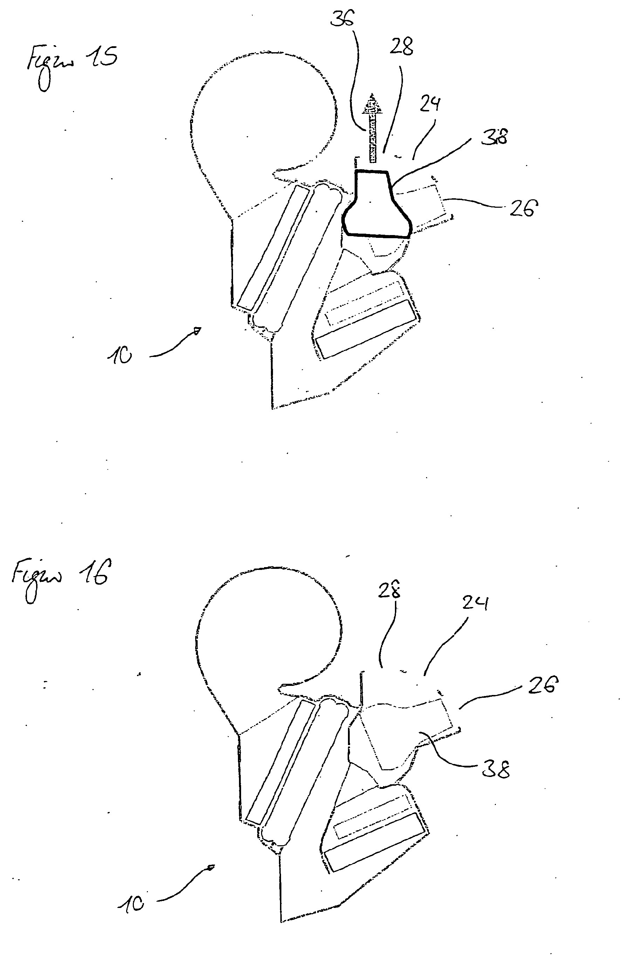

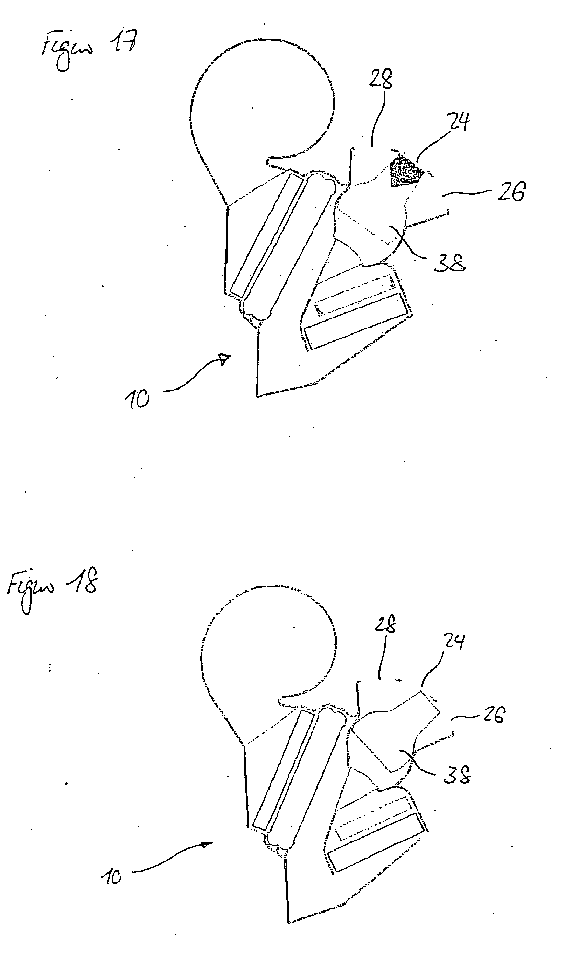

Figur 15 verdeutlicht eine erste Anschlagstellung der dritten Verteilerklappe 38, bei der die dritte Ausströmöffnung 28 freigegeben ist. Die erste Ausströmöffnung 24 und die zweite Ausströmöffnung 26 sind hierbei verschlossen. Figur 16 verdeutlicht eine zweite Anschlagstellung der dritten Verteilerklappe 38, bei der die zweite Ausströmöffnung 26 freigegeben ist. Die erste Ausströmöffnung 24 und die dritte Ausströmöffnung 28 sind hierbei verschlossen. Figur 17 verdeutlicht eine Mittelstellung, bei der nur die erste Ausströmöffnung 24 geöffnet ist, während die beiden anderen Ausströmöffnungen verschlossen sind.

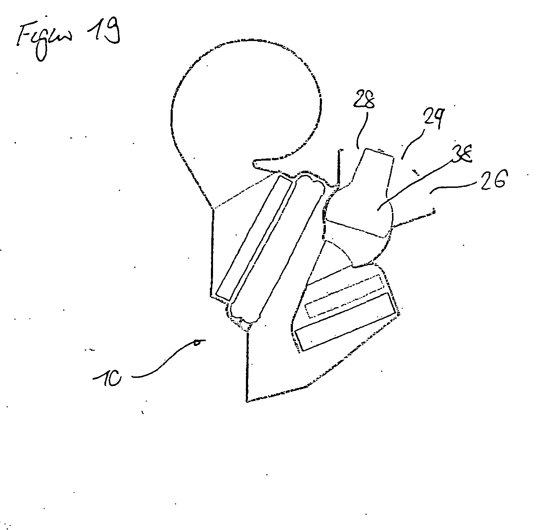

Die Figuren 18 und 19 verdeutlichen jeweils Zwischenstellungen der dritten Verteilerklappe 38, bei denen zwei der drei Ausströmöffnungen 24, 26 und 28 teilweise freigegeben sind, während die dritte Ausströmöffnung jeweils geschlossen ist.

Die in Figur 17 gezeigte Mittelstellung kann insbesondere zur Fußraumklimatisierung vorgesehen sein, da die ersten Ausströmöffnungen 24 seitlich am Gehäuse 11 münden. Die dritte Verteilerklappe 38 ist entsprechend geformt, so dass die Luft zur Seite geleitet wird.

Die Stellung der Mischungsklappe ist hierbei ohne Bedeutung, da bei allen gezeigten Betriebszuständen sowohl kalte als auch warme Luft gefördert werden kann.

Alle gezeigten Varianten der Klimatisierungsvorrichtung 10 weisen ein sehr kompaktes Gehäusedesign auf und ermöglichen es, die Luftverteilung auf drei Ausströmöffnungen mittels zweier Luftverteilungsklappen oder gar nur einer Klappe in gewünschter Weise zu steuern. Gegenüber bekannten Klimaanlagen kann auf diese Weise mindestens eine Klappe eingespart werden, was zu einem vereinfachten Aufbau, zu einer vereinfachten Ansteuerung und zu einer Verringerung der Herstellkosten führt.

## Patentansprüche

1. Klimatisierungsvorrichtung zur Klimatisierung eines Raumes, insbesondere eines Kraftfahrzeuginnenraumes, mit einem Luftführungskanal (12) und einer darin angeordneten Kühleinrichtung (14) sowie einer stromabwärts der Kühleinrichtung (14) in einem Zweigkanal (20) angeordneten Heizeinrichtung (18), und mit einem parallel zum Zweigkanal (20) verlaufenden Bypasskanal (21), wobei die Luftverteilung zwischen dem Zweigkanal (20) und dem Bypasskanal (21) mittels wenigstens einer Mischungsklappe (22) variabel einstellbar ist, wobei eine Luftverteilung zwischen wenigstens drei in den Raum bzw. in den Kraftfahrzeuginnenraum mündenden Ausströmöffnungen (24, 26, 28) mittels zweier Verteilerklappen (32,34) variabel einstellbar ist, wobei die Luftverteilung zwischen einer ersten Ausströmöffnung (24) und einer zweiten Ausströmöffnung (26) mittels einer zwischen diesen angeordneten Verteilerklappe (32) variabel einstellbar ist, wobei eine zweite Verteilerklappe (34) zwischen der zweiten Ausströmöffnung (26) und einer dritten Ausströmöffnung (28) angeordnet ist, **dadurch gekennzeichnet, dass** die Luftverteilung zwischen der zweiten Ausströmöffnung (26) und der dritten Ausströmöffnung (28) mittels der zweiten Verteilerklappe (34) variabel einstellbar ist, wobei die zweite Ausströmöffnung entweder durch die erste oder die zweite Verteilerklappe verschließbar ist.

2. Klimatisierungsvorrichtung nach einem der voranstehenden Ansprüche, **dadurch gekennzeichnet, dass** in einer ersten Anschlagstellung der ersten Verteilerklappe (32) die erste Ausströmöffnung (24) verschlossen ist.

3. Klimatisierungsvorrichtung nach einem der voranstehenden Ansprüche, **dadurch gekennzeichnet, dass** in einer ersten Anschlagstellung der zweiten Verteilerklappe (34) die zweite Ausströmöffnung (26) verschlossen und die dritte Ausströmöffnung (28) freigegeben ist.

4. Klimatisierungsvorrichtung nach einem der voranstehenden Ansprüche, **dadurch gekennzeichnet, dass** in einer zweiten Anschlagstellung der zweiten Verteilerklappe (34) die zweite Ausströmöffnung (26) freigegeben und die dritte Ausströmöffnung (28) verschlossen ist.

5. Klimatisierungsvorrichtung nach einem der voranstehenden Ansprüche, **dadurch gekennzeichnet, dass** die erste und die zweite Verteilerklappe (32, 34) jeweils in eine Zwischenstellung bringbar ist, bei der wenigstens zwei Ausströmöffnungen (24, 26, 28) teilweise freigegeben sind.

6. Klimatisierungsvorrichtung nach einem der voranstehenden Ansprüche, **dadurch gekennzeichnet, dass** für jede Seite des Fahrzeuginnenraums jeweils wenigstens eine erste, eine zweite sowie eine dritte Ausströmöffnung (24, 26, 28) vorgesehen ist, die mittels wenigstens zweier Verteilerklappen (32, 34) variabel öffenbar bzw. verschließbar sind.

## Claims

1. Air-conditioning' unit for air-conditioning a space, in particular the inside space of a motor vehicle, with an air duct (12) and a cooling device (14) arranged therein and a heating device (18) arranged in a branch duct (20) downstream from the cooling device (14), and with a bypass duct (21) extending parallel to the branch duct (20), such that the distribution of air between the branch duct (20) and the bypass duct (21) can be variably adjusted by means of a mixing valve (22) and the air distribution between at least three outlets (24, 26, 28) that open into the inside space of the vehicle can be variably adjusted by means of two distribution damper-valves (32, 34), the air distribution between a first outlet (24) and a second outlet (26) being variably adjustable by means of a distribution valve (32) arranged between them and a second distribution valve (34) being arranged between the second outlet (26) and a third outlet (28), **characterised in that** the air distribution between the said second (26) and third (28) outlets can be variably adjusted by means of the said second distribution valve (34), and the second outlet can be closed either by the first or by the second distribution valve.

2. Air-conditioning unit according to Claim 1, **characterised in that** the first outlet (24) is closed when the first distribution valve (32) is in a first end position.

3. Air-conditioning unit according to either of the preceding claims, **characterised in that** the second outlet (26) is closed and the third outlet (28) is open when the second distribution valve (34) is in a first end position.

4. Air-conditioning unit according to any of the preceding claims, **characterised in that** the second outlet (26) is open and the third outlet (28) is closed when the second distribution valve (34) is in a second end position.

5. Air-conditioning unit according to any of the preceding claims, **characterised in that** the first and second distribution valves (32, 34) can each be moved to an intermediate position in which at least two of the outlets (24, 26, 28) are partially open.

6. Air-conditioning unit according to any of the preceding claims, **characterised in that** for each side of the vehicle's inside space at least a first, a second and a third air outlet (24, 26, 28) are provided, which can be variably opened or closed by means of at least two distribution damper-valves (32, 34).

## Revendications

1. Dispositif de climatisation permettant la climatisation d'un espace, en particulier de l'habitacle d'un véhicule automobile, comprenant un conduit de passage d'air (12) et un dispositif de refroidissement (14) disposé à l'intérieur de ce conduit de passage d'air, ainsi qu'un dispositif de chauffage (18) disposé dans un conduit secondaire (20) placé en aval du dispositif de refroidissement (14), et un conduit de dérivation (21) s'étendant parallèlement au conduit secondaire (20), la répartition d'air entre le conduit secondaire (20) et le conduit de dérivation (21) étant réglable, de façon variable, au moyen d' au moins un volet de mélange (22), une répartition d'air entre au moins trois orifices de diffusion (24, 26, 28) débouchant dans l'espace ou dans l'habitacle du véhicule automobile étant réglable, de façon variable, au moyen de deux volets répartiteurs (32, 34), la répartition d'air entre un premier orifice de diffusion (24) et un deuxième orifice de diffusion (26) étant réglable, de façon variable, au moyen d'un volet répartiteur (32) disposé entre ces orifices de diffusion, un deuxième volet répartiteur (34) étant disposé entre le deuxième orifice de diffusion (26) et un troisième orifice de diffusion (28),
**caractérisé en ce que** la répartition d'air entre le deuxième orifice de diffusion (26) et le troisième orifice de diffusion (28) est réglable, de façon variable, au moyen du deuxième volet répartiteur (34), le deuxième orifice de diffusion pouvant être fermé par le premier ou par le deuxième volet répartiteur.

2. Dispositif de climatisation selon la revendication précédente, **caractérisé en ce que** le premier orifice de diffusion (24) est fermé dans une première position de butée du premier volet répartiteur (32).

3. Dispositif de climatisation selon l'une ou l'autre des revendications précédentes, **caractérisé en ce que**, dans une première position de butée du deuxième volet répartiteur (34), le deuxième orifice de diffusion (26) est fermé et le troisième orifice de diffusion (28) ouvert.

4. Dispositif de climatisation selon l'une quelconque des revendications précédentes, **caractérisé en ce que**, dans une deuxième position de butée du deuxième volet répartiteur (34), le deuxième orifice de diffusion (26) est ouvert et le troisième orifice de diffusion (28) fermé.

5. Dispositif de climatisation selon l'une quelconque des revendications précédentes, **caractérisé en ce que** les premier et deuxième volets répartiteurs (32, 34) peuvent être placés, à chaque fois, dans une position intermédiaire dans laquelle au moins deux orifices de diffusion (24, 26, 28) sont partiellement ouverts.

6. Dispositif de climatisation selon l'une quelconque des revendications précédentes, **caractérisé en ce qu'**il est prévu à chaque fois, pour chaque côté de l' habitacle du véhicule, au moins un premier, un deuxième ainsi qu'un troisième orifices de diffusion (24, 26, 28) qui peuvent être ouverts ou fermés, de façon variable, au moyen d'au moins deux volets répartiteurs (32, 34).
